# EUROPEAN PATENT APPLICATION

(11) **EP 4 011 202 A1**
(43) Date of publication of application: **15.06.2022**
(21) Application number: 21210553.0
(22) Date of filing: 25.11.2021
(51) Int. Cl.: A01K 97/02

(54) **BAIT CASTING DEVICE**

(30) Priority: 11.12.2020 GB 202019568
(71) Applicant: Ultimate Future Ltd, London EC1V 2NX (GB)
(72) Inventor: TILLER, Carl, Staines-Upon-Thames, TW18 4US (GB)
(74) Representative: King, Alex

(57) **Abstract**

The present invention relates to a bait casting device, in particular provides a bait casting device which comprises a chamber for holding bait and wherein the device is configured such that, on impact of the device with water, the bait is ejected from the chamber into the air above the location of impact.

## Description

The present invention relates to a bait casting device, in particular for use in fishing.

It is well-known in fishing for the angler to cast bait in the area of the fishing line/hook to attract fish. When the line/hook of the fishing rig is a significant distance from the angler then it is necessary to cast not only the rig but also the bait a significant distance. Traditional methods have involved devices such as catapult, although only a limited amount of bait can be catapulted each time, and the distance and accuracy of such methods can be variable.

In order to overcome such issues a number of dedicated devices are available.

"Throwing sticks" are handheld devices which are loaded with bait and then used to throw the bait a significant distance. However, throwing bait with such devices is difficult to master, and the accuracy is often quite poor.

Other devices are themselves filled with bait and then cast to the fishing area, typically on a separate line to the main fishing rig. EP 2244564 B 1, for example, describes a spring loaded bait casting device. The device has two halves which contain the bait when closed, and the device opens when the device hits the water, releasing the bait. This system has achieved significant success but has the disadvantage that the bait is released in a relatively small area around the site of impact. This is particularly an issue if the casting is not accurate.

A further device is known as a "spod". This is an open-ended device which is designed such that it tips upside down after it lands on the water using a float in the end of the device, releasing bait through an open end. As with the device in EP 2244564 B1, this tends to release the bait in a relatively small area. This is again particularly an issue if the casting is not accurate.

A yet further device is the TFG "AirBomb". This device also has two halves which contain the bait when closed and that open to release bait, but in this case the device opens in mid-air when the casting line becomes tight. Although this tends to give a good spread of bait, it is often in a line in the direction of the casting. A particular disadvantage of this device is that it is difficult to get the correct range, and the device often opens and releases the bait early.

The present invention seeks to overcome the disadvantages of the prior art, and in particular to provide a reliable and desirable distribution of bait at the desired location.

Thus, in a first aspect the present invention provides a bait casting device which comprises a chamber for holding bait and wherein the device is configured such that, on impact of the device with water, the bait is ejected from the chamber into the air above the location of impact.

The present device differs from the prior art devices in that bait is ejected into the air when the device impacts the water. This can be contrasted to the device in EP 2244564 B1, for example, where the bait simply falls out of the device into the water at the impact location. The present invention, by ejecting the bait into the air achieves an improved spread of the bait at the site of impact.

The present device can also be contrasted with the AirBomb device noted above in that in the present invention the ejection of the bait only occurs when the device impacts the water.

The device of the present invention can be any suitable overall shape/profile. In general, the chamber for the bait will be elongated, and of uniform cross-section along the majority of its length, usually cylindrical. Hence the device will be shaped to accommodate this. Typically the device comprises an outer housing around the chamber. The external profile of the device/outer housing is generally elongated, having a nose section at the front end and a rear or tail section at the other end. The external profile may be shaped, for example in an overall "tear-drop" shape, and/or may include protrusions, such as fins, to enhance the flight of the device during the cast. This can enable further distance in casting and also more reliable/accurate casting.

The nose section may be conical or curved, such as hemispherical or toroidal, for example. The external profile of the device is typically of a generally cylindrical form. It may taper to a narrower rear or "end" . Alternatively a wider tapered section may be provided towards the end.

The device of the present invention should, in use, have a downward direction of travel when the device impacts the water i.e. so that the nose of the device hits the water whilst the tail is generally pointed upwards at the moment of impact. This may be achieved by suitable design of the product. For example, the loading of the bait in the device may provide suitable bias for this to occur. Although it is not preferred in the present invention, the nose section may include a weight. Examples of some suitable general external profiles are found in EP 2244564 B1 already noted. In general the device of the present invention, even where a taper is present, does not narrow too much because it is necessary that the tail end includes a suitable size opening for ejection of the bait. Preferred examples are described further below with reference to the Figures, although it will be apparent that many similar external profiles would be suitable.

The overall size of the device is not critical, and is generally adapted for the amount of bait to be cast. The chamber is typically sized to have a volume of about 50 to 400 cm³, although it may not be desired to fill it entirely with bait in use.

Typically the overall device may be 50 to 300mm in length, such as 100 to 200mm. The diameter of the outer housing, excluding any external fins if present, is typically 20 to 150mm, such as 50 to 100mm. The majority of the device (including for example, the chamber, the outer housing, other internals as described below where practical) is preferably made of a plastic material, such as of a polyolefin, and preferably of polypropylene. In particular, such materials are of low density. This helps to keeps the weight of the overall device down which is advantageous in casting and in minimising the risk of the casting line breaking. Such materials are also relatively inexpensive, can be moulded to the desired shape, for example by injection moulding, and are non-toxic to marine life. In preferred embodiments the nose may be formed of an expanded foam/expanded polyolefin, such as expanded polypropylene. In preferred embodiments the device will float on water (i.e. its overall density is less than water such that it will float). This means it is more easily retrievable even if it becomes disconnected from the fishing line. Overall density can, if desired, be reduced by adding expanded foam or expanded polyolefin either inside or outside of the device.

The ejection of the bait on impact with the water may be caused by any suitable means. The mechanism can be pneumatic, for example. A preferred means is to use a plate that is held in the lower part of the chamber of the device during the cast, preferably at or close to the bottom of the chamber. (As used herein, the "lower part" and/or the "bottom" of the chamber relate to the end nearest the nose of the device.) The bait sits in the chamber and on top of the plate. On impact with the water the plate pushes up through the chamber towards the top of the chamber/tail end of the device, ejecting the bait in the chamber through the top of the chamber/tail of the device and into the air.

A particularly preferred means to eject the bait is to use a spring-loaded plate that, during the cast, is held (against the force of a compressed spring) in the lower part of the chamber of the device. (As will be illustrated below, the spring is located beneath the plate and is compressed by moving the plate towards the bottom of the chamber. This spring may be retained by a second plate as described further below.) On impact with the water the spring-loaded plate is released (i.e. the means holding the plate with the spring compressed is released), and the spring acts to pushes the plate up the chamber, ejecting any bait therein through the top of the chamber/tail of the device and into the air.

The spring of the spring-loaded plate may be sized to give the required force of ejection. In some embodiments the device may be provided with options to change the force. This could be provided, for example, by changing the size/tension of the spring. In an alternative embodiment the device may be provided with means to hold the plate at different levels within the chamber - a lower level would require higher compression of the spring, and correspondingly would provide a larger ejection force when the plate is released, and vice versa.

The plate may be held in place in the lower part of the chamber (against the force of the spring) by any suitable means. For example, protrusions could be provided on the internal surface of the chamber and on the outer circumference of the spring-loaded plate by which the plate could be held. The protrusions could be mated and unmated by twisting the plate slightly within the chamber, for example. On activation in this example the plate could be caused to twist from under the protrusions and would hence be released.

A preferred means, however, comprises the provision of one or more holes, slots or protrusions on the base of the spring-loaded plate that can latch onto corresponding holes, slots or protrusions on a surface below and against which the spring of the spring-loaded plate is compressed. This lower surface may be, for example, a second plate located under the spring-loaded plate in the chamber, or may be the base of the chamber itself.
Thus, the spring-loaded plate is moved down the chamber to compress the spring against the lower surface until the plate latches onto the lower surface - either through corresponding holes, slots or protrusions on said surface as noted.

A particularly preferred configuration comprises protrusions on the bottom part of the spring-loaded plate in the form of one or more clips which pass though one or more holes in the lower surface/second plate and latch the spring-loaded plate into place, as described further below in relation to the Figures. The clips or protrusions may be formed of a plastic material. Thus includes polyolefins such as polypropylene, as already noted, but preferably the clips or protrusions are made of reinforced plastic, such as glass-reinforced nylon. Metal or metal reinforcement of the clips, such as a metal brace, may also be used to give additional strength to the clips and/or to reduce wear and tear.

A particularly preferred configuration comprises a second plate located under the spring-loaded plate in the chamber. In this case the spring of the spring-loaded plate sits between the spring-loaded plate and the second plate. During compression the spring pushes downwards on the second plate. Further, when the spring-loaded plate is latched onto the second plate (to maintain the spring in a compressed state) then there may also be a pulling force on the second plate from the latching means.

Due to the forces on it the second plate should preferably be held firmly in position within the chamber. This may be achieved by any suitable means. For example, the second plate may comprise two or more protrusions which locate inside slots on the inside of the chamber wall and hold the second plate in place in the chamber and/or the second plate may comprise one or more ribs which can be held against a corresponding rib around the inside of the chamber. Alternatively, the second plate may be permanently fixed in place, for example, may be held with rivets, welded, or may be an integral part of a moulded body of the device.

In a preferred configuration the second plate is removable from the device. In a particularly preferred configuration both the second plate and the spring of the spring-loaded plate are removable. This is, in particular, a preferred means to change the spring for one of a different tension for example, or simply to replace a worn or damaged spring.

Most preferably a removable collar may be provided on the device. The collar may be connected via one or more threaded sections for example, and then can be detached by unscrewing it. When connected, the collar section may provide a recess in which a corresponding rib or protrusions on the second plate can sit, holding the second plate firmly within the device. When the collar is detached from the device the second plate can be removed, and optionally also the spring of the spring-loaded plate. This enables one or both of these parts to be replaced. This could be, for example, if a different tension spring was desired as already discussed above. An example of a particularly preferred configuration is described below with reference to the Figures.

More generally, and however held in place, a further advantage of providing a separate second plate in the chamber is that the second plate can provide additional support to the chamber and the main body of the device at its tail end, reducing flex and distortion. More generally, on activation of the device in the present invention the means by which the latching of the spring-loaded plate to the lower surface occurs is then released, enabling the compressed spring to expand and push the spring-loaded plate up the chamber. This will eject any bait present as already noted.

The spring-loaded plate may sit "freely" within the chamber e.g. a circular plate inside a cylindrical chamber. To assist in the movement of the plate up and down the chamber, however, it may be preferred to provide protrusions on the edge of the plate which can sit within corresponding channels which extend lengthways up the chamber. This can improve the movement of the plate within the chamber. For example, it can help to prevent the spring-loaded plate "tilting" from a plane normal to the axis of the chamber.

A further advantage of this is that the channels can be used to limit the maximum movement of the plate. Particularly when the spring pushes the plate up the chamber to eject bait, the upper limits of the channels may be used to define an upper distance that the plate can move. If this is within the full extension of the spring, for example, this will cause a sudden stopping of the plate which can aid the ejection of the bait in the chamber.

In a preferred embodiment two or more edges of the spring-loaded plate may be attached to a means provided externally on the device which can be used to move the spring-loaded plate down the chamber against the force of the spring (i.e. to compress the spring). For example, protrusions or bosses may be provided which pass through slots in the chamber wall and to the external profile. The spring-loaded plate may be connected to the external means for moving the plate through the protrusions or bosses. The slots not only ensure the movement lengthways up the chamber when ejecting bait, but the external means can be used to move the spring-loaded plate down the chamber by pushing or pulling in the direction of the slots.

Typically there are at least two protrusions or bosses on the spring-loaded plate which pass through corresponding slots and connect to the external means. There may be more than two, such as three or four connections (where "connection" means a protrusion or boss which passes through a slot and connects to the external means). The slots are preferably evenly spaced around the external profile. For example, if there are two slots then they are typically on opposite sides of the device (and correspondingly the protrusions or bosses are provided on opposite sides of the plate.) If there are three slots then typically they may be about 120° from each other, and if there are four, then typically they may be about 90° from each other, in each case as measured around the cross-section of the device. The exact location of the slots may however also be adjusted if needed, for example in view of other surface features.

Grommets or similar may be provided in the slots, particularly at the ends thereof, to reduce noise of the device when activated and/or to reduce stresses on the device.

A particularly preferred external means for moving the spring-loaded plate against the force of the spring is a collar which sits around the external profile and is connected to the protrusions or bosses of the spring-loaded plate.

Other suitable external means may be used, however, such as a handle.

The external means connected to the spring-loaded plate is a preferred embodiment. However, in other embodiments other means may be provided to enable the spring-loaded plate to be moved towards the bottom of the chamber against the force of the spring. In one example a separate device, such as a rod or sleeve, which fits inside the chamber, may be inserted into the end of the device and used to push the spring-loaded plate towards the bottom of the chamber where is then latches into place.

The top of the chamber may be open during casting. In some embodiments a cover or lid may be provided on the top of the chamber or on the tail end of the device which covers the chamber during the casting but opens when the device impacts the water. In a preferred embodiment the tail end comprises a hinged cover. The cover may be held in place during casting by any suitable means. Examples include a catch which is released by the impact of the device with water, particularly a magnetic catch. The cover (or lid) may be spring-biased to ensure it opens once released from its closed position. In embodiments the device may comprise a rod or similar which moves up the chamber and physically pushes open the cover (or lid) before the bait is ejected.

In some embodiments the top (open) end of the chamber may be of an expanded cross-section compared to the majority of the chamber. An expanded opening has two benefits. Firstly, it makes it easier to load bait into the chamber. Secondly, and most importantly, the expanded section can increase the area over which the bait is dispersed when ejected.

The device should comprise a means to activate the device i.e. cause the bait to be ejected when the device hits the water. This may be considered as a "trigger". In the embodiment with a spring-loaded plate, for example, the trigger will release the means holding the plate with the spring in a compressed position. The trigger may, for example, be a button or "plunger", which is pressed by the surface of the water on impact. The button or plunger can also be spring-loaded.

An example of such a trigger involving a spring-loaded plunger can be found in EP 2244564 B1, for example. In particular, although the device of the present invention otherwise is significantly different to the devices in EP 2244564 B1, the mechanism for activating/triggering using the impact on the water to move a spring-loaded plunger can be similar.

Other "physical or mechanical" means of triggering the device on impact with water may be used however. It may also be possible to use electronic means. For example, the nose of the device may comprise two metal contacts close together and the impact with the water can complete a circuit which triggers the device electronically.

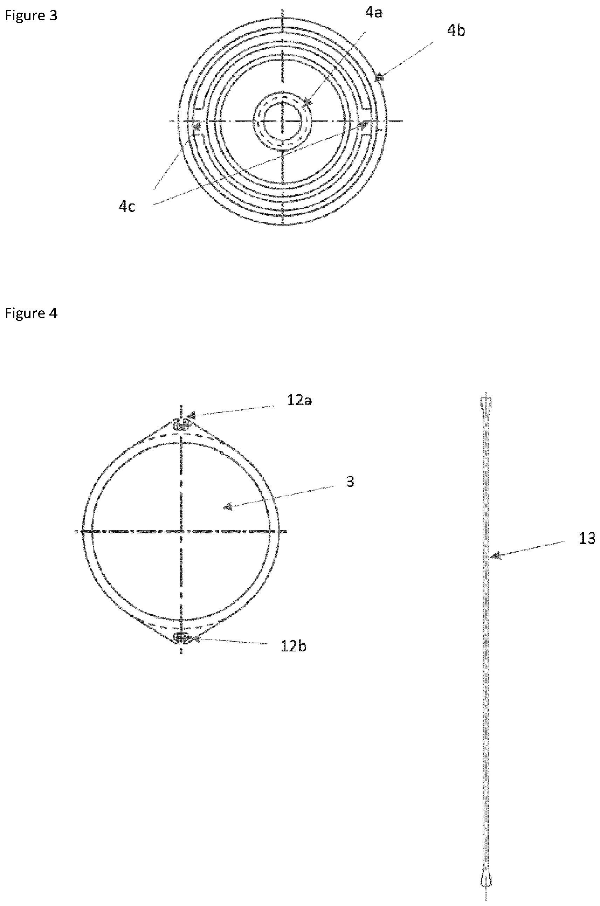

The device typically includes one or more points on its external profile, for example loops or hooks, by which it can be connected to a fishing line for casting. The exact means is not critical, but could include, for example, means to connect directly to a fishing line or means to connect to an intermediate device, such as a swivel, which intermediate device is then connected to a fishing line. A particularly preferred means connects the tail end of the device to a silicone or similar strip at two or more points, to which a conventional swivel connector can then be connected. An example is provided below with reference to Figure 4.

The device of the present invention is generally used for casting bait for fishing.

Thus, in a second aspect the present invention provides a method for fishing which comprises:
i) Providing a bait casting device as already described,
ii) Filling the device with bait, and
iii) Casting said device.

The present invention is of particular utility in carp or specimen fishing, and in particular on lakes or rivers.

The bait may be any suitable bait for the type of fishing to be performed. The bait to be used is commonly referred to as "ground-bait" or "loose feed", which is a term used to refer to bait which is cast into the water by an angler in order to attract fish to a fishing area. There are many different types of ground-bait including commercial products and products "home-produced" by individual anglers. The bait is often initially produced in the form of pellets or balls. Typical bait "forms" used by carp anglers or specimen anglers, for example, are "boilies", pellets and particles.

"Boilies", for example, are boiled paste fishing balls, usually combinations of fishmeals, milk proteins, bird foods and other ingredients, which are mixed with a binding agent and then boiled and formed into hard balls.

Another type of fishing bait which is commonly used is Tigernuts. These are not actually nuts at all, but a small root vegetables with a rough texture.

After casting the device is generally retrieved by the angler. It may then be reloaded and cast again as desired.

A preferred device according to the invention, and its use, will be illustrated by reference to the Figures, wherein:
Figure 1 shows in schematic form a first view of a device according to the present invention.
Figure 2 shows in schematic form a second view of a device according to the present invention.
Figure 3 shows a top view of a spring-loaded plate of Figures 1 and 2.
Figure 4 shows a view looking at the tail end of the device of Figures 1 and 2, and a strip for connection of the device to a fishing line or rig.
Figure 5 shows in schematic form a view of a further device according to the present invention.
Figure 6 shows in schematic form a second view of the further device of Figure 5.

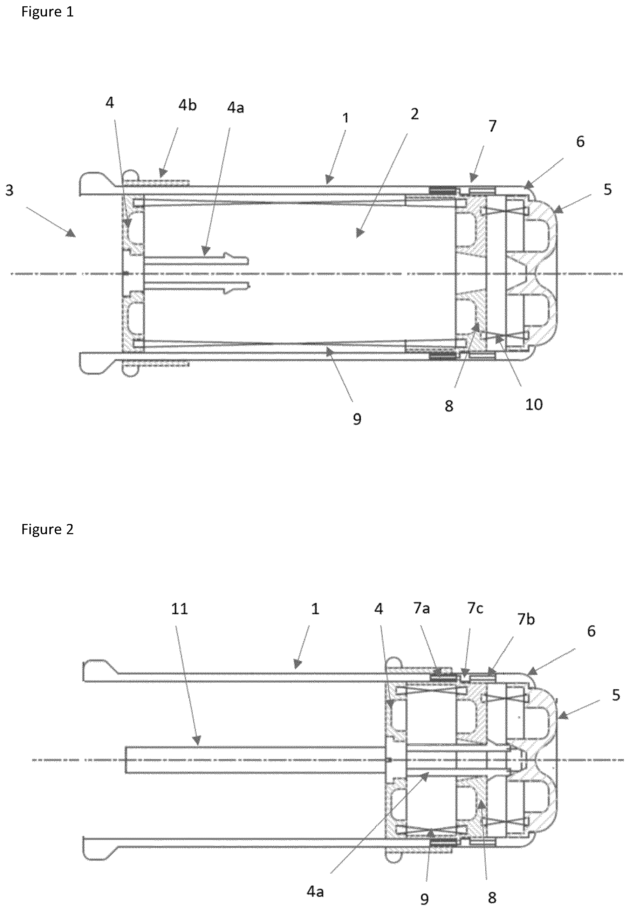

In particular, Figure 1 shows a bait casting device according to one embodiment of the present invention. The device comprises a cylindrical outer housing (1), a chamber (2) and a tail end with an open tail section (3). Located within the device is a spring-loaded plate (4), which comprises protrusions (4a) and an outer section (4b) which forms a collar around the outside of the outer housing (1). As shown in Figure 1 the plate (4) is sitting at the top of the chamber near the tail end of the device. At its front end the device comprises a button (5) at the nose section (6). Between the outer housing (1) and the nose section (6) the device comprises a connecting/collar section (7), and inside the chamber (2) at the collar section (7) is provided a second plate (8). A first spring (9) is provided between the spring-loaded plate (4) and the second plate (8). A second spring (10) is provided between the second plate (8) and the button (5). The second plate (8) is held firmly in place by the collar section (7) as described further below.

To set up the device for use, the spring-loaded plate (4) is moved through the chamber in the direction of the second plate (8) using the collar (4b). This compresses the first spring (9). The protrusions (4a) pass through a hole provided in the centre of the second plate (8), and latch the spring-loaded plate (4) to the second plate (8) and in the lower part of the chamber (2).

The spring-loaded plate (4) latched in position is shown in Figure 2. (This Figure uses the same numbering as Figure 1, although not all parts are labelled again.) It should be noted from Figure 2 that the ends of the protrusions (4a) of the spring-loaded plate (4) contact a tapered hollow in the rear of the button (5).

Additional features of the collar section (7) are also shown in Figure 2. In particular, the collar is connected to the outer housing (1) via a first threaded section (7a) and to the nose section (6) via a second threaded section (7b). The collar section (7) also provides a recess (not labelled) between a rib (7c) and the first threaded section (7a) in which a corresponding rib or protrusions on the second plate (8) can sit, holding the second plate (8) firmly within the device (2). The use of the connecting collar (7) enables the device (2) to be taken apart and the spring (9) and second plate (8) to be removed and, if necessary, one or more of these parts can be replaced. This could be, for example, if a different tension spring was desired. Also shown in Figure 2 is a slot (11) which is provided in the side of the chamber and housing.

Figure 3 shows a top view of the spring-loaded plate (4). The protrusions (4a) extend away from the viewer in this Figure. The outer section (4b) shown in this Figure forms a collar around the outside of the housing (1) as shown/described for Figure 1. Also shown in Figure 3 are protrusions (4c) on the spring-loaded plate that connect the main part of the plate with the outer section (4b). In use, these protrusions align with and pass through slots (11) on the housing, including the slot (11) in Figure 2.

Figure 4 shows a view looking at the tail end of the device of Figures 1 and 2, and in particular looking at the open tail section (3). On either side of the tail end are provided connecting slots (12a, 12b). Figure 4 also shows an example of a thin flexible strip (13) the ends of which can be connected at the respective slots (12a, 12b) to thereby provide a loop between them. A swivel may be placed on the strip (13) before connecting to the slots (12a, 12b), which can then be connected to a fishing line or rig. An advantage of this means of connection is that, prior to casting, the device "hangs" by the loop in a level and nose downward direction, preventing bait from falling out. Further, when casting the nose of the device is projected away from the angler, with the fishing line behind. The strip (13) may be of any suitable material. Silicone is a preferred example since it is soft and falls quickly out of the way of the ejecting bait when the device hits the water.

In use, the device is set-up as in Figure 2 and bait is loaded into the chamber (2) of the device. The device is then connected to a suitable fishing line or rig, preferably by a means such as described for Figure 4, and cast. On contact with water, the impact of the water on the button (5) compresses the spring (10) and pushes the button (5) towards the second plate (8). The protrusions (4a) are pushed inwards by the hollow on the rear of the button (5), releasing them from the hole in the second plate (6). Once released the compressed spring (9) expands rapidly, pushing the spring-loaded plate (4) up through the chamber (2) and ejecting the bait from the chamber (2) through the tail end (3) of the device.

The empty device is then retrieved by reeling in the fishing line or rig, and can be reloaded and reused.

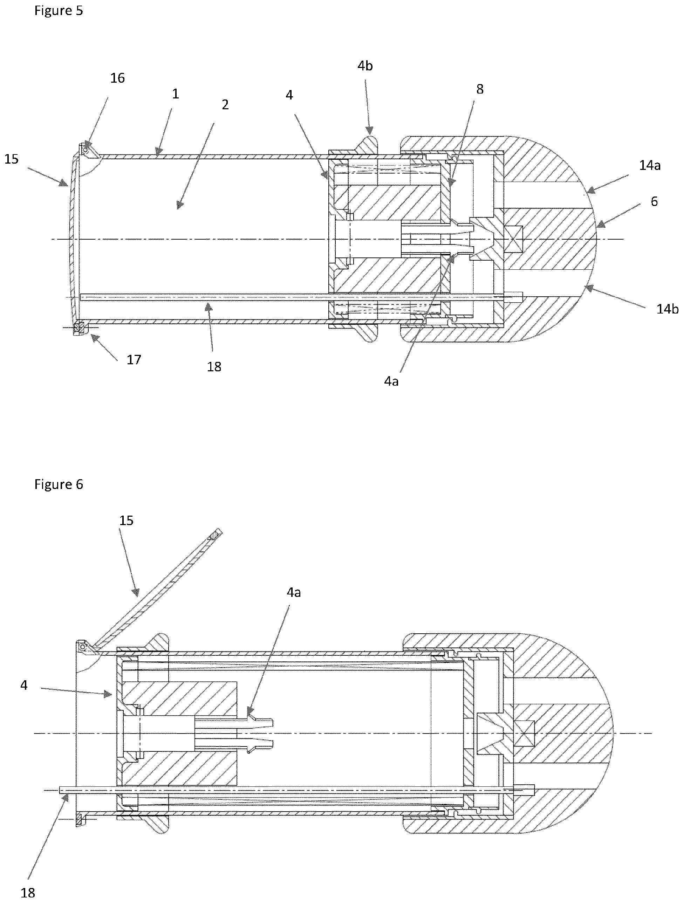

Figure 5 shows an alternative of the device of Figure 2. In this case the device comprises a number of the same general features including a cylindrical outer housing (1), a chamber (2), a spring-loaded plate (4) with protrusions (4a) and an outer section/collar (4b) and a second plate (8). (It should be noted however that not all corresponding features are labelled in Figure 5). At the front the device comprises a nose section (6). This differs in design from the nose section of Figure 2 as the sides of the nose section sit around the outside of the main body. The nose section also includes through bores (14a, 14b) which can allow water to pass through.

The device of Figure 5 also includes a cover (15) which sits over the tail end of the device during casting. The cover (15) has a spring-biased hinge (16) on one side and a magnetic clasp (17) on the other. On contact with water, the impact of the water on the nose pushes the nose section upwards and the protrusions on the inner plate holding the bait (not labelled) are pushed inwards by the hollow on the rear of the nose section (6), releasing them in a similar manner to described for Figure 2. The device further comprises a rod (18) which is also pushed by the impact of the water on the nose, pushing open the cover (15). Once released the spring-biased cover opens fully, whilst the spring-loaded plate is pushed up through the chamber (2) ejecting the bait from the chamber (2) through the tail end of the device.

In the device according to Figure 5, the body and plates are preferably made of polypropylene, the protrusions (4a) of glass reinforced nylon, and the nose section of expanded polypropylene.

Figure 6 shows the device of Figure 5 after activation, with the cover (15) open, the rod (18) protruding from the tail end of the device, and the spring-loaded plate (4) in the upper end of the chamber.

The device according to the present invention may be provided in the form of a kit. The kit may comprise two or more springs (9) of different tension which can be used to alter the force with which bait is ejected. In this case the springs of different tension may be provided as individual components i.e. separate springs, or there could be provided a component comprising a spring and second plate, and optionally also a "new" spring-loaded plate, to simply slot into the device and replace the "old" parts together.)

In some embodiments, the spring-loaded plate (4) may comprise one or more parts which can be replaced. For example, the protrusions (4a) may be separable from the rest of the plate (4). This means that the parts can be replaced if they break or become worn. Any suitable connection means may be used in this case. For example a section comprising the protrusions (4a) may connect to the rest of the plate (4) via a screw or similar threaded connection.

## Claims

1. A bait casting device which comprises a chamber for holding bait and wherein the device is configured such that, on impact of the device with water, the bait is ejected from the chamber into the air above the location of impact.

2. A device according to claim 1 wherein the external profile of the device is generically elongated, having a nose section at the front end and a rear or tail section at the other end, wherein the tail section has an opening to allow the ejection of the bait from the tail section.

3. A device according to claim 1 or claim 2 wherein the external profile of the device is shaped and/or includes protrusions to enhance the flight of the device during the cast.

4. A device according to any one of the preceding claims wherein the device comprises a spring-loaded plate located in the chamber, which plate is held in the lower part of the chamber of the device during the cast, and which, on the impact with the water pushes up through the chamber ejecting any bait therein through the top of the chamber/tail of the device and into the air.

5. A device according to claim 4 wherein protrusions are provided on the edge of the spring-loaded plate which sit within corresponding channels which extend lengthways up the chamber.

6. A device according to claim 4 or claim 5 wherein protrusions or bosses are provided on the spring-loaded plate which pass through slots in the chamber wall and to the external profile.

7. A device according to claim 6 wherein the spring-loaded plate comprises or connects via the protrusions or bosses to an external means for moving the spring-loaded plate in the chamber.

8. A device according to claim 7 wherein the external means for moving the spring-loaded plate against the force of the spring is a collar which sits around the external profile.

9. A device according to any one of claims 4 to 8 wherein a second plate located under the spring-loaded plate is provided in the chamber, and a removable collar is provided on the device, where detaching the removable collar enables the second plate, and optionally the spring, to be removed and replaced.

10. A device according to any one of the preceding claims wherein a means to activate the device is provided on the nose section of the device.

11. A device according to any one of the preceding claims wherein a means to activate the device is provided which is a button or plunger, which is pressed by the surface of the water on impact of the device with the water.

12. A device according to claim 10 wherein the button or plunger is spring-loaded.

13. A method for fishing which comprises:
a. Providing a bait casting device as claimed in any one of claims 1 to 11,
b. Filling the device with bait, and
c. Casting said device.

14. A method according to claim 10 which is a method for carp and specimen fishing.

15. A kit comprising a device according to any one of claims 1 to 11, said kit including a spring-loaded plate and at least two different springs which can be used with the spring-loaded plate.
